# EUROPEAN PATENT APPLICATION

(11) **EP 4 589 704 A1**
(43) Date of publication of application: **23.07.2025**
(21) Application number: 24803708.7
(22) Date of filing: 08.05.2024
(51) Int. Cl.: H01M 10/04, H01M 50/342

(54) **FORMATION DEVICE OF BATTERY CELL**

(30) Priority: 11.05.2023 KR 20230061390
(71) Applicant: LG Energy Solution, Ltd., Seoul 07335 (KR)
(72) Inventor: JUNG, Jea Bong, Daejeon 34122 (KR); CHA, Ji Hoon, Daejeon 34122 (KR); AHN, Chang Bum, Daejeon 34122 (KR); CHOI, Byung Man, Daejeon 34122 (KR); WOO, Min Ki, Daejeon 34122 (KR); SEO, Jun Yeong, Daejeon 34122 (KR)
(74) Representative: Goddar, Heinz J.
(86) International application number: PCT/KR2024/006175
(87) International publication number: WO 2024/232655

(57) **Abstract**

A battery cell formation device according to one example of the present invention comprises a jig part including a plurality of pressure plates movably provided to pressurize a plurality of battery cells, a gas removal part provided to be movable together with one pressure plate of the plurality of pressure plates, and connected to the pressure plate to face a gas pocket of the battery cell in contact with the pressure plate, and a position adjustment part provided to adjust the position of the gas removal part on the pressure plate.

## Description

### Technical Field

The present invention relates to a battery cell formation device, and more specifically, relates to a battery cell formation device capable of performing, during an activation process of a plurality of battery cells, a gas removal process for each individual battery cell, and particularly, relates to a battery cell formation device in which a jig part for pressurizing battery cells, and a gas removal part are incorporated.

This application claims the benefit of priority based on Korean Patent Application No. 10-2023-0061390 dated May 11, 2023, the disclosure of which is incorporated herein by reference in its entirety.

### Background Art

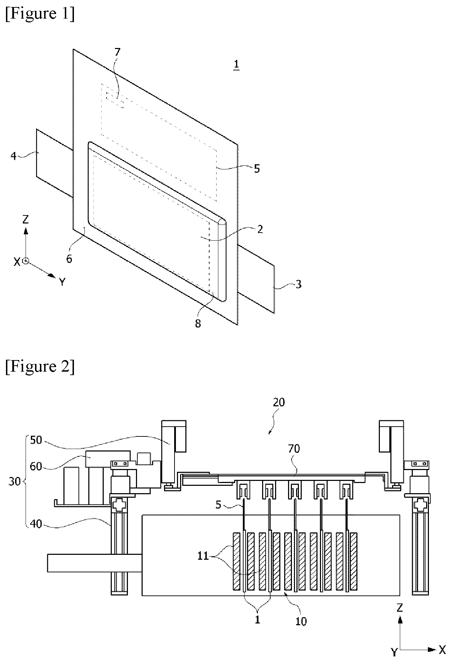

Figure 1 is a perspective diagram of a general pouch-type battery cell (1).

Referring to Figure 1, the pouch-type battery cell (1) comprises an electrode assembly (2), a pouch case (6) surrounding the electrode assembly (2), and a pair of electrode tabs (3,4) electrically connected to the electrode assembly (2). The pouch case (6) may have a cup portion (8) in which the electrode assembly (2) is accommodated, and a gas pocket (7) in which gas is collected during an activation process.

The electrode assembly (2) is accommodated in the pouch case (6), and some regions of the electrode tabs (3, 4) are exposed to the outside of the pouch case (6). The electrode assembly (2) is an assembly in which a positive electrode plate, a negative electrode plate, and a separator are cross-laminated. The electrode assembly (2) is impregnated with an electrolyte solution in the inner space of the pouch case (6).

If the assembly of the pouch-type battery cell (1) is completed, the activation process of the pouch-type battery cell (1) is performed. The activation process stabilizes the structure of the battery cell and makes the battery cell (1) usable through the process of charging, aging, and discharging the pouch-type battery cell (1).

In the activation process, a large amount of gas is generated inside the pouch-type battery cell (1).

When the pouch-type battery cell (1) is expanded by the pressure of the gas upon the activation process, bonding force between an active material and a current collector may be weakened while the negative electrode plate, separator, and positive electrode plate are lifted in the lamination direction. Accordingly, a gas removal process is performed to remove the gas generated during the activation process.

If the gas generated inside the pouch-type battery cell (1) is not efficiently removed during the activation process, the gas occupies a certain space inside the pouch-type battery cell (1), thereby preventing uniform formation, and adversely affecting battery performance, such as capacity and output, and battery life.

The gas removal process is a process of removing the gas trapped inside the pouch-type battery cell (1), which pressurizes the pouch case (6), thereby causing to collect the gas in a gas pocket (5), and then pierces the gas pocket (5) to create a degas hole (7), and heat-fuses the degas hole (7) to be sealed.

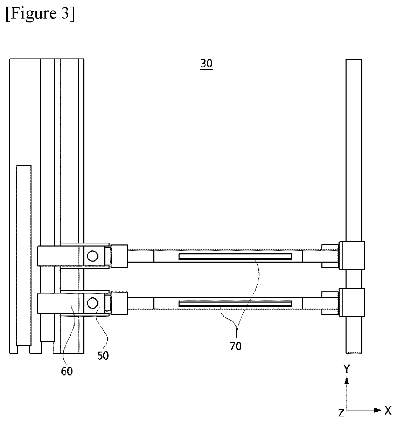

Figure 2 is a schematic diagram showing a conventional cell gas removal device (20), and Figure 3 is a plan view of the cell gas removal device shown in Figure 2.

Referring to Figures 2 and 3, the conventional cell gas removal device (20) is installed on the top of a cell charging jig (10). The cell charging jig (10) is a device in which the activation process of the pouch-type battery cell (1) is performed, which comprises a plurality of pressure plates (11) pressurizing the battery cell (1).

The cell gas removal device (20) is a separate device from the cell charging jig (10), which comprises a position adjustment part (30) and a gas removal part (70).

The position adjustment part (30) is a device adjusting the position of the gas removal part (70) so that the gas removal part (70) faces the gas pocket (5) of the battery cell (1).

The conventional cell gas removal device (20) has a separate structure from the cell charging jig (10), which is provided to adjust the position of the gas removal part (70) in three axes. Specifically, the position adjustment part (30) comprises an x-axis drive part (50), a y-axis drive part (60), and a z-axis drive part (40). Accordingly, the cell gas removal device (20) has a problem that the layout of its components becomes overly complicated.

Therefore, it became difficult to secure a worker's visual field, and it was difficult to secure sufficient space for replacement of parts, and the like, so that the worker's maintenance and repair management was not easy.

As the conventional cell gas removal device (20) is provided to simultaneously perform the gas removal process on a plurality of pouch-type battery cells (1) arranged in the cell charging jig (10), there is a problem that the size of the entire device increases.

### Disclosure

### Technical Problem

The present invention is intended to provide a battery cell formation device in which a gas removal part is integrated with a pressure plate for pressurizing the battery cell.

Also, the present invention is intended to a battery cell formation device capable of simplifying a position adjustment structure of a gas removal part and adjusting the position of the gas removal part with only one axial direction movements.

In addition, the present invention is intended to provide a battery cell formation device capable of performing on a plurality of battery cells, on which an activation process has been performed, a gas removal process.

Furthermore, the present invention is intended to provide a battery cell formation device capable of differently adjusting a position of a gas removal part with respect to a gas pocket of a battery cell for each process, such as a piercing process, a gas suction process, and a sealing process.

### Technical Solution

A battery cell formation device according to one example of the present invention comprises a jig part including a plurality of pressure plates movably provided to pressurize a plurality of battery cells, a gas removal part provided to be movable together with one pressure plate of the plurality of pressure plates, and connected to the pressure plate to face a gas pocket of the battery cell in contact with the pressure plate, and a position adjustment part provided to adjust the position of the gas removal part on the pressure plate.

The position adjustment part may be provided to be movable together with the pressure plate.

The battery cell formation device may comprise a first rail extending along the moving direction of the pressure plate and provided on the pressure plate to guide the movement of the gas removal part, and a frame part disposed apart from the pressure plate and provided with a guide rail guiding the movement of the position adjustment part in the moving direction of the pressure plate.

The gas removal part may comprise first and second venting modules each provided to perform a gas removal process in a gas pocket of the battery cell disposed toward a first surface of the pressure plate and a gas pocket of the battery cell disposed toward a second surface of the pressure plate in the opposite direction to the first surface.

Also, the first and second venting modules may each be provided to be movable on the pressure plate, and the position adjustment part may be provided to adjust a gap between the first and second venting modules. That is, the position adjustment part may also increase the gap between the first and second venting modules by moving them away from each other, and may reduce the gap between the first and second venting modules by moving them closer to each other.

In addition, the first venting module may comprise a piercing unit provided to form a degas hole in the gas pocket of the battery cell, a vacuum unit provided to apply vacuum pressure to the degas hole and to suck the gas in the gas pocket, and a sealing unit sealing the degas hole.

Furthermore, the second venting module may comprise a piercing unit provided to form a degas hole in the gas pocket of the battery cell, a vacuum unit provided to apply vacuum pressure to the degas hole and to suck the gas in the gas pocket, and a sealing unit sealing the degas hole.

Also, the vacuum unit may be provided to surround the piercing unit, and the sealing unit may be provided to surround the vacuum unit.

In addition, the sealing unit may be provided to seal a region with a diameter larger than that of the degas hole.

Furthermore, the vacuum unit may be provided to protrude toward the gas pocket of the battery cell rather than the sealing unit.

Also, the first and second venting modules may be provided so that the centers of the respective piercing units are not located on the same side.

In addition, the position adjustment part may be provided to adjust the gap between the first and second venting modules to a first gap upon operation of the piercing unit, and the position adjustment part may be provided to adjust the gap between the first and second venting modules to a second gap, which is narrower than the first gap, upon operation of the vacuum unit.

Furthermore, the position adjustment part may be provided to adjust the gap between the first and second venting modules to a third gap, which is larger than the first gap, upon operation of the sealing unit.

The position adjustment part may comprise a module drive part movably coupled to the guide rail, a first connecting member connecting the first venting module provided on the pressure plate and the module drive part, and a second connecting member connecting the second venting module provided on the pressure plate and the module drive part.

Also, the module drive part may be provided to adjust the gap between the first and second connecting members.

In addition, the module drive part may comprise a motor or a cylinder. The module drive part may be movably mounted along the guide rail of the frame part. Accordingly, upon movement of the pressure plate, the first and second venting modules move together with the pressure plate, and the module drive part moves in the moving direction of the pressure plate along the guide rail.

As one example, the cylinder may comprise a pneumatic or oil hydraulic cylinder, where one end may be mounted on the first connecting member, and the other end may be mounted on the second connecting member. In this structure, the gap between the first and second connecting members may be adjusted through the cylinder, and accordingly, the gap between the first and second venting modules on the pressure plate may be adjusted.

As another example, the module drive part may comprise a motor, where the motor may be an electric motor capable of rotating in forward and reverse directions. The motor may be connected to a gearbox provided to convert the rotational force of the motor into axial linear motion through a gear. At this time, one end of the gearbox may be mounted on the first connecting member, and the other end may be mounted on the second connecting member. In this structure, the gap between the first and second connecting members may be adjusted through the cylinder, and accordingly, the gap between the first and second venting modules on the pressure plate may be adjusted.

Also, the position adjustment part may comprise one or more joint portions connecting the first connecting member and the second connecting member.

In addition, the joint portion may comprise a first link hinge-connected to each of the first connecting member and the second connecting member, a second link disposed to intersect the first link and hinge-connected to each of the first connecting member and the second connecting member, and a hinge axis connecting the first link and the second link in the intersection region of the first link and the second link.

Furthermore, a plurality of the gas removal parts may be provided, and the gas removal parts may be provided individually for each pressure plate. Also, a plurality of the position adjustment parts may be provided, which may be provided individually for each gas removal part. At this time, the module drive parts of the plurality of position adjustment parts may each be provided to be movable along the guide rail of the frame part. In this structure, the battery cell formation device may comprise a jig part including a plurality of pressure plates provided to pressurize a plurality of battery cells and provided to perform an activation process of the plurality of battery cells, a plurality of gas removal parts provided in each pressure plate to face gas pockets of the battery cells and provided to perform a gas removal process of the activation process for each battery cell, and a plurality of position adjustment parts connected to each gas removal part and adjusting a position of each gas removal part along the moving direction of the pressure plate.

In addition, the battery cell formation device may comprise a control part individually controlling operation of each gas removal part and each position adjustment part so that the gas removal process is performed on one or more battery cells among the plurality of battery cells arranged in the jig part.

### Advantageous Effects

As discussed above, the battery cell formation device related to at least one example of the present invention has the following effects.

As the gas removal part is integrated into the pressure plate for pressurizing the battery cell, it is possible to promote miniaturization of the device.

Also, by performing the gas removal process for each battery cell during the activation process on the plurality of battery cells, it is possible to improve the activation efficiency of the battery cells.

In addition, the conventional cell gas removal device is composed of a separate device from the cell charging jig to adjust the position of the cell gas removal device in three axis directions, whereas in the present invention, primarily, the gas removal part can be moved together with the pressure plate, and secondarily, the position adjustment part can adjust the position of the gas removal part in one axis direction (for example, the moving direction of the pressure plate).

Furthermore, since the position adjustment part can individually adjust the position of the gas removal part, it is possible to precisely control the venting position of the gas removal part, and it is possible to improve the gas removal efficiency of the gas removal part.

In addition, the plurality of gas removal parts can be operated individually, and the gas removal process can also be individually performed on only some battery cells among the plurality of battery cells on which the activation process has been performed.

### Description of Drawings

Figure 1 is a perspective diagram of a general pouch-type battery cell.
Figure 2 is a schematic diagram showing a conventional cell gas removal device.
Figure 3 is a plan view of the cell gas removal device shown in Figure 2.
Figure 4 is a configuration diagram of a battery cell formation device according to one example of the present invention.
Figure 5 is a perspective diagram schematically showing a coupled state of a gas removal part and a position adjustment part coupled to any one of a plurality of pressure plates.
Figure 6 is a perspective diagram showing a first venting module.
Figure 7 is a schematic plan view of the device shown in Figure 5.
Figure 8 is a diagram schematically showing a state cut along Line A-A in Figure 5.
Figure 9 is a diagram for explaining, in a battery cell formation device related to one example of the present invention, one operating state of a jig part upon an activation process.
Figure 10 is a diagram for explaining, in a battery cell formation device related to one example of the present invention, one operating state of a position adjustment part upon a gas removal process.
Figure 11 is a diagram showing a state where a battery cell is introduced into a jig part.
Figure 12 is a diagram for explaining a piercing step during a gas removal process.
Figure 13 is a diagram for explaining a venting step during a gas removal process.
Figure 14 is a diagram for explaining a sealing step during a gas removal process.

### Mode for Invention

Hereinafter, with reference to the accompanying drawings, a battery cell formation device according to one example of the present invention will be described.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

A battery cell formation device related to one example of the present invention can perform a gas removal process for each battery cell upon an activation process for a plurality of battery cells or after the activation process is completed.

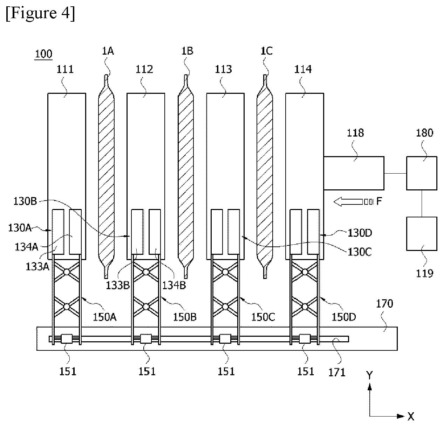

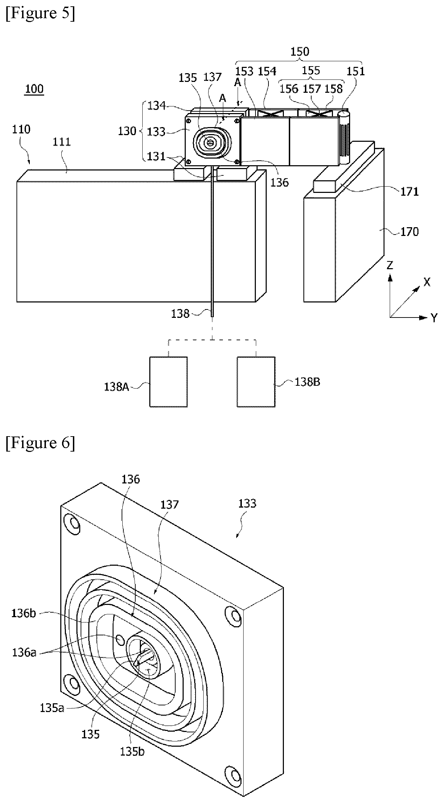

Figure 4 is a configuration diagram of a battery cell formation device (100) according to one example of the present invention, and Figure 5 is a perspective diagram schematically showing a coupled state of a gas removal part and a position adjustment part coupled to any one of a plurality of pressure plates.

Referring to Figures 4 and 5, the battery cell formation device (100) may comprise a jig part (110), one or more gas removal parts (130), and one or more position adjustment parts (150).

Also, the battery cell formation device (100) may comprise a charging part (119) for charging the plurality of battery cells (1A to 1C) arranged in the jig part (110), and a frame part (170) disposed apart from the jig part (110), and a control part (180). In addition, the control part (180) is provided to control the operation of the jig part (110), the charging part (119), the gas removal part (130), and the position adjustment part (150).

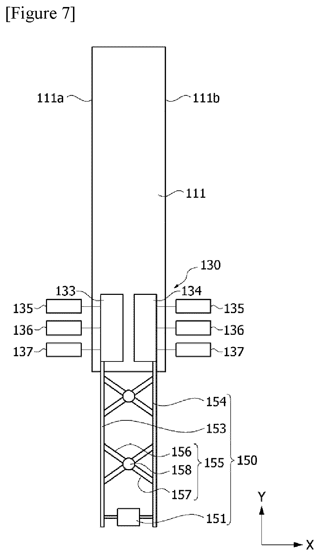

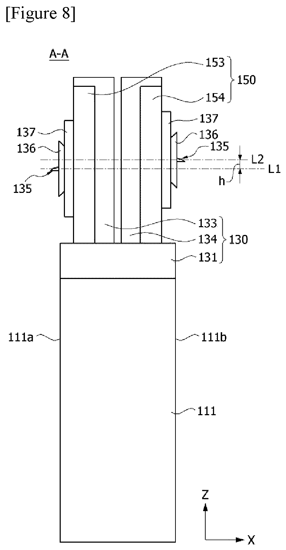

In addition, Figure 6 is a perspective diagram showing a first venting module (133), Figure 7 is a schematic plan view of the device shown in Figure 5, and Figure 8 is a diagram schematically showing a state cut along Line A-A in Figure 5.

Referring to Figures 4 and 5, the jig part (110) is a device performing a battery cell activation process. The jig part (110) may comprise a plurality of pressure plates (111 to 114), and a jig drive part (118) for moving the pressure plates (111 to 114). The plurality of battery cells (1A to 1C) is arranged within the jig part (110).

Each battery cell (1A to 1C) may be disposed in a space between two adjacent pressure plates (111 to 114). In addition, each battery cell (1A to 1C) is the same as the battery cell (1) described with reference to Figure 1, and for convenience of explanation, different reference numerals have been imparted depending on the order in which they are arranged in the jig part (110).

The jig drive part (118) may comprise a driving motor and a driving shaft, and when the driving shaft rotates by rotation of the driving motor, the plurality of pressure plates (11 to 114) engaged therewith moves in one direction. Accordingly, the jig part (110) may pressurize both sides of the battery cells (1A to 1C). As such, upon the activation process, the jig drive part (118) moves the plurality of pressure plates (111 to 114) in one direction (x-axis direction), and provides the battery cells (1A~1C) disposed between two adjacent pressure plates (111 to 114) with a predetermined pressing force (F).

Referring to Figure 1, the pouch-type battery cell (1) related to this example comprises an electrode assembly (2), and a pouch case (6) surrounding the electrode assembly (2), and a pair of electrode tabs (3, 4) electrically connected to the electrode assembly (2). The pouch case (6) may have a cup portion (8) in which the electrode assembly (2) is accommodated, and a gas pocket (7) in which gas is collected during the activation process.

In this document, the x-axis direction represents the thickness direction of the battery cell (1), the y-axis direction represents the longitudinal direction (the direction connecting the pair of electrode tabs) of the battery cell (1), and the z-axis direction represents the width direction of the battery cell (1). In addition, the x-axis direction indicates the arrangement direction of the pressure plates, or the moving direction of the pressure plates.

The cup portion (8) and the gas pocket (7) may be positioned apart from each other along the width direction of the battery cell (1).

The plurality of battery cells (1A to 1C) is arranged in an upright state within the jig part (110), and the state where the battery cells are erect means that the gas pocket (5) is located above and the cup portion (8) is located below.

At this time, each pressure plate (111 to 114) may be provided to pressurize the cup portion (8) of the battery cell (1). When the pressure plates (111 to 114) pressurize the cup portion (8) upon the activation process, the gas generated inside the battery cell (1) may be moved to the gas pocket (5), and the gas pocket (5) expands.

In this document, the plurality of pressure plates (111 to 114) may comprise a first pressure plate (111) to a fourth pressure plate (114). The first to fourth pressure plates (111 to 114) represent four pressure plates that are randomly continuous along the arrangement direction of the plurality of pressure plates. Also, the arrangement direction of the plurality of pressure plates and the moving direction of each pressure plate may be in the same direction (x-axis direction). In addition, in this document, the respective battery cells disposed between two adjacent pressure plates along the direction from the first pressure plate (111) toward the fourth pressure plate (114) are referred to as the first battery cell (1A) to the third battery cell (1C).

The first battery cell (1A) is disposed between the first pressure plate (111) and the second pressure plate (112); the second battery cell (1B) is disposed between the second pressure plate (112) and the third pressure plate (113); and the third battery cell (1C) is disposed between the third pressure plate (113) and the fourth pressure plate (114).

The jig part (110) operates for the plurality of pressure plates (111 to 114) to be spaced apart at predetermined intervals so that upon insertion of the battery cells (1A, 1B, 1C), the battery cells (1A, 1B, 1C) can be inserted. When charging/discharging the battery cells after completing the insertion of the battery cells (1A, 1B, 1C), the jig part (110) operates for the plurality of pressure plates (111 to 114) to pressurize the plurality of battery cells (1A, 1B, 1C).

Referring to Figures 4 and 5, the gas removal part (130) is provided to be movable together with one pressure plate (for example, 111) of the plurality of pressure plates, and connected to the pressure plate (111) to face the gas pocket (5) of the battery cell (1A) in contact with the pressure plate (111). The gas removal part (130) may be provided for each pressure plate, and in this structure, the battery cell formation device (100) may comprise a plurality of gas removal parts (130). Also, the plurality of gas removal parts (130: 130A to 130D) may be mounted on the respective pressure plates (111 to 114).

The position adjustment part (150) may be provided to adjust the position of the gas removal part (130) on the pressure plate (111). Also, the position adjustment part (150) may be provided to be movable together with the pressure plate (111). That is, when the pressure plate (111) is moved by the jig drive part (118), the position adjustment part may be moved together by the driving force in which the pressure plate (111) is moved. To this end, the position adjustment part (150) may be connected to the gas removal part (130). In addition, in the state where the gas removal parts (130: 130A to 130D) are mounted on the respective pressure plates (111 to 114), the formation device (100) may be provided with a plurality of position adjustment parts (150: 150A to 150D).

Referring to Figure 5, the battery cell formation device (100) may comprise a first rail (131) extending along the moving direction of the pressure plate (111) and provided on the pressure plate (111) to guide the movement of the gas removal part (130), and a frame part (170) disposed apart from the pressure plate (111) and provided with a guide rail (171) guiding the movement of the position adjustment part (150) in the moving direction of the pressure plate (111).

The position adjustment part (150) may be connected to the gas removal part (130), and moved in the moving direction of the pressure plate (111) along the guide rail (171) by the movement of the gas removal part (130).

Referring to Figures 5, 7, and 8, each gas removal part (130) is a device performing a process of removing gas from a gas pocket (5) of the battery cell (1A to 1C) arranged in the jig part (110). The gas removal part (130) provided on any one pressure plate (111) may comprise first and second venting modules (133, 134) each provided to perform a gas removal process in a gas pocket (5) of the battery cell disposed toward a first surface (111a) of the pressure plate (111) and a gas pocket (5) of the battery cell disposed toward a second surface (111b) of the pressure plate (111) in the opposite direction to the first surface (111a). At this time, the first and second venting modules (133, 134) may each be provided to be movable on the pressure plate (111). The first and second venting modules (133, 134) may be provided so that the position of the battery cell in the width direction (Z-axis direction) is maintained constant, and they are movable in the thickness direction of the battery cell (x-axis direction, moving direction of the pressure plate).

The first rail (131) may be provided on the top of each pressure plate (111 to 114), and the pair of venting modules (133, 134) may be movably mounted on the first rail (131). The first rail (131) is provided to guide the movement of the pair of venting modules (133, 134) in the arrangement direction (X) of the pressure plate (111).

Also, the first venting module (133) may comprise a piercing unit (135) provided to form a degas hole (7, see Figure 1) in the gas pocket (5) of the battery cell (1), a vacuum unit (136) provided to apply vacuum pressure to the degas hole (7) and to suck the gas in the gas pocket (5), and a sealing unit (137) sealing the degas hole (7).

In addition, the second venting module (134) may comprise a piercing unit (135) provided to form a degas hole (7, see Figure 1) in the gas pocket (5) of the battery cell (1), a vacuum unit (136) provided to apply vacuum pressure to the degas hole (7) and to suck the gas in the gas pocket (5), and a sealing unit (137) sealing the degas hole (7).

The piercing unit (135), vacuum unit (136), and sealing unit (137) of the first venting module (133) are exposed toward the first surface (111a) of the pressure plate (111), and the piercing unit (135), vacuum unit (136), and sealing unit (137) of the second venting module (134) are exposed toward the second surface (111b) of the pressure plate (111).

The piercing unit (135) is a device piercing the gas pocket (5) so that the degas hole (7) is formed in the gas pocket (5) of the battery cell, the vacuum unit (136) is a device applying vacuum pressure to the gas hole (7) of the gas pocket (5) and sucking the gas in the gas pocket (5), and the sealing unit (137) is a device sealing the degas hole (7) after the operation of the vacuum unit (136) is completed.

In this way, the gas removal process may be simultaneously performed on two battery cells disposed on both sides (111a, 111b) of the pressure plate (111) through the first and second venting modules (133, 134).

Referring to Figures 6 and 8, the piercing unit (135) may comprise a needle portion (135a) for forming the degas hole (7), and a predetermined space portion (135b) provided around the needle portion (135a).

The vacuum unit (136) may be provided to surround the piercing unit (135). The vacuum unit (136) may have one or more discharge holes (136a), and may comprise a contact pad (136b) for contacting the gas pocket (5). The contact pad (136b) may be provided to contact a region with a diameter larger than that of the degas hole (7) and may be provided to surround the space portion (135b) of the piercing unit (135). The discharge hole (136a) is located inside the contact pad (136b), where the vacuum pressure may be applied through the discharge hole (136a). In addition, the contact pad (136b) may be provided to be compressible.

Also, the sealing unit (137) may be provided to surround the vacuum unit (136). The sealing unit (137) may comprise a heater, and the sealing unit (137) may be provided to seal a region with a diameter larger than that of the degas hole (7). In addition, the sealing unit (137) may be provided to seal a region with a larger diameter than the region where the contact pad (136b) contacts the gas pocket (5).

The vacuum unit (136) and the sealing unit (137) may be arranged in a concentric circle based on the piercing unit (135).

Also, the vacuum unit (136) may be provided to protrude toward the gas pocket (5) of the battery cell rather than the sealing unit (137). As one example, the contact pad (136b) may be provided to protrude toward the gas pocket (5) of the battery cell rather than the sealing unit (137).

Referring to Figure 8, the first and second venting modules (133, 134) may be provided so that the centers of the respective piercing units (135) are not located on the same side. That is, a virtual line segment (L1) passing through the center of the piercing unit (135) of the first venting module (133) and a virtual line segment (L2) passing through the center of the piercing unit (135) of the second venting module (134) do not coincide, which may be spaced apart by a predetermined distance (h) along the width direction of the battery cell. That is, the piercing unit (135) of the first venting module (133) and the piercing unit (135) of the second venting module (134) may be spaced apart by a predetermined distance (h) along the width direction (z-axis direction) of the battery cell.

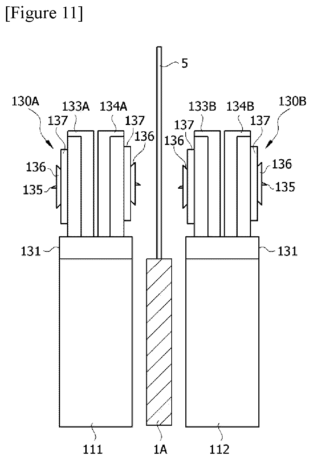

Through this structure, when the piercing unit operates (piercing process), it is possible to prevent the piercing unit (135) of the second venting module (134A, see Figure 11) on the first pressure plate (111) and the piercing unit (135) of the first venting module (133B, see Figure 11) on the second pressure plate (112) from colliding.

Referring to Figure 5, a utility line (138) may be connected to the pair of venting modules (133, 134). The utility line (138) may also be built into the pressure plates (111 to 114), and may also be connected to the pair of venting modules (133, 134), respectively. The utility line (138) may comprise a power supply line (138A) and a vacuum pressure supply line (138B).

The power supply line (138A) may apply power to the piercing unit (135), the vacuum unit (136), and the sealing unit (137), respectively, and the vacuum pressure supply line (138B) may supply vacuum pressure to the vacuum unit (136), and connected to the discharge hole (136b).

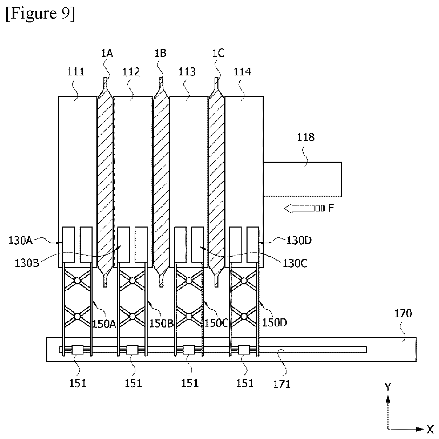

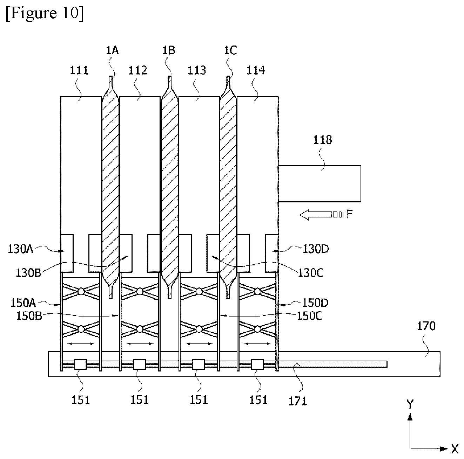

Figure 9 is a diagram for explaining, in a battery cell formation device related to one example of the present invention, one operating state of a jig part upon an activation process, and Figure 10 is a diagram for explaining, in a battery cell formation device related to one example of the present invention, one operating state of a position adjustment part upon a gas removal process.

Referring to Figures 5 and 7, the position adjustment part (150) may comprise a module drive part (151) movably coupled to the guide rail (171), a first connecting member (153) connecting the module drive part (151) and the first venting module (133) provided on the pressure plate (111), and a second connecting member (154) connecting the module drive part (151) and the second venting module (134) provided on the pressure plate (111). In addition, the module drive part (151) may be provided to adjust the gap between the first and second connecting members (153, 154).

Also, the module drive part (151) may comprise a motor or a cylinder.

In addition, the module drive part (151) may be movably mounted along the guide rail (171) of the frame part (170). Accordingly, upon movement of the pressure plate (111), the first and second venting modules (133, 134) move together with the pressure plate (111), and the module drive part (151) moves in the moving direction (x-axis direction) of the pressure plate (111) along the guide rail (171).

Furthermore, the position adjustment part (150) may comprise one or more joint portions (155) connecting the first connecting member (153) and the second connecting member (154).

In addition, the joint portion (155) may comprise a first link (156) hinge-connected to each of the first connecting member (153) and the second connecting member (154), a second link (157) disposed to intersect the first link (156) and hinge-connected to each of the first connecting member (153) and the second connecting member (54), and a hinge axis (158) connecting the first link (156) and the second link (157) in the intersection region of the first link (156) and the second link (157).

The pair of venting modules (133, 134) provided on the first rail portion (131) of the pressure plate (111) may be provided so that the gap is adjusted along the arrangement direction (X) of the pressure plate (111) by the position adjustment part (150) in a state where the pressure plate (111) is stopped. In addition, the pair of venting modules (133, 134) may be provided to vent the gas pockets (5) of different battery cells disposed on both sides (111a, 111b) of the pressure plate (111) upon the gas removal process.

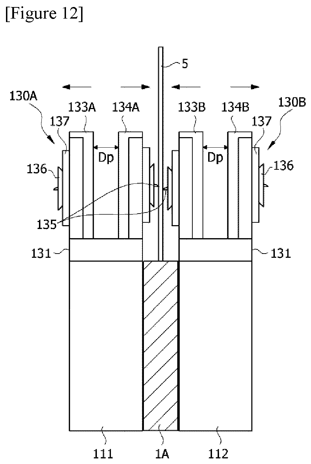

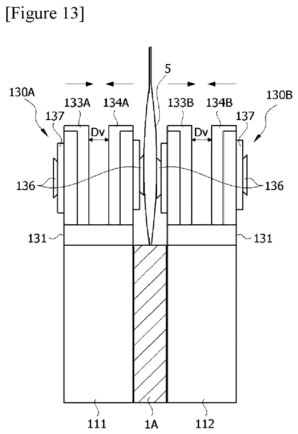

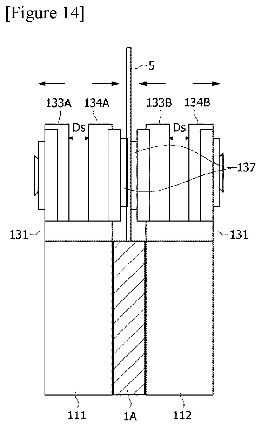

Figure 11 is a diagram showing a state where a battery cell is introduced into a jig part, Figure 12 is a diagram for explaining a piercing step during a gas removal process, Figure 13 is a diagram for explaining a venting step during a gas removal process, and Figure 14 is a diagram for explaining a sealing step during a gas removal process.

Also, the plurality of position adjustment parts (150: 150A to 150D) may be coupled to each gas removal part (130). The plurality of position adjustment parts (150: 150A to 150D) adjusts the gap between the pair of venting modules (133A and 134A, 133B and 134B) provided in each gas removal part (130) upon the gas removal process.

The plurality of position adjustment parts (150) may be movably mounted on the guide rail (171).

Each position adjustment part (150) moves in the moving direction of each pressure plate (111 to 114) along the guide rail (171) upon operation of the jig drive part (181). In addition, each position adjustment part (150) is provided to stop on the guide rail (171) when the movement of the pressure plate stops.

Each position adjustment part (150) is provided to adjust the gap between the pair of venting modules (133, 134) provided on the pressure plate along the moving direction (X) of the pressure plate.

Also, the position adjustment part (150) may be provided to adjust the gap between the first and second venting modules (133, 134) to a first gap (Dp) upon operation of the piercing unit (135), and the position adjustment part (150) may be provided to adjust the gap between the first and second venting modules (133, 134) to a second gap (Dv), which is narrower than the first gap (Dp), upon operation of the vacuum unit (136).

In addition, the position adjustment part (150) may be provided to adjust the gap between the first and second venting modules (133, 134) to a third gap (Ds), which is larger than the first gap (Dp), upon operation of the sealing unit (137).

Referring to Figure 12, each position adjustment part (150) adjusts the position of the pair of venting modules (133A and 134A, 133B and 134B) so that upon operation of the piercing unit (135) of the gas removal part (130A) provided on the first pressure plate (111) and the piercing unit (135) of the gas removal part (130B) provided on the second pressure plate (112), the pair of venting modules (133A and 134A, 133B and 134B) are spaced apart from each other to the first gap (Dp, see Figure 11(b)).

Here, the first gap (Dp) means a gap that when the piercing unit (135) of each venting module contacts the gas pocket (5) of the battery cell (1A), the pair of venting modules (133A and 134A, 133B and 134B) are spaced apart from each other.

Referring to Figure 13, each position adjustment part (150) adjusts the position of the pair of venting modules (133A and 134A, 133B and 134B) so that upon operation of the vacuum unit (136), the pair of venting modules (133A and 134A, 133B and 134B) are spaced apart from each other to the second gap (see Dv) which is narrower than the first gap (Dp).

Here, the second gap (Dv) means a gap that when the vacuum unit (136) of each venting module contacts the gas pocket (5) of the battery cell (1A), the pair of venting modules (133, 134) are spaced apart from each other. Meanwhile, when gas is removed, the gas pocket (5) is expanded along the thickness direction of the battery cell.

Referring to Figure 14, each position adjustment part (150) adjusts the position of the pair of venting modules (133A and 134A, 133B and 134B) so that upon operation of the sealing unit (137), the pair of venting modules (133A and 134A, 133B and 134B) are spaced apart from each other to the third gap (Ds) which is larger than the first gap (Dp).

Here, the third gap (Ds) means a gap that when the sealing unit (137) of each venting module contacts the gas pocket (5) of the battery cell (1A), the pair of venting modules (133A and 134A, 133B and 134B) are spaced apart from each other.

In this way, each position adjustment part (150: 150A to 150D) may precisely adjust the gap of the pair of venting modules (133, 134) for each gas removal part (130). In addition, each position adjustment part (150) may adjust the gap of the pair of venting modules (133, 134) differently according to each step of the gas removal process.

The operating direction of the module drive part (151) may be adjusted by the control part (180). The module drive part may comprise a motor and a gearbox, where when the motor rotates in a first operating direction, the gap between the first connecting member (153) and the second connecting member (154) may widen, and when the motor rotates in a second operating direction opposite to the first operating direction, the gap between the first connecting member (153) and the second connecting member (154) may narrow.

At least one joint portion (155) may connect the first connecting member (153) and the second connecting member (154), and may support the first connecting member (153) and the second connecting member (154).

Also, the first link (156) and the second link (157) may be arranged to cross each other in an X shape. The hinge axis (158) may connect the intersection of the first link (156) and the second link (157). The first link (156) and the second link (157) may be folded or unfolded around the hinge axis (158) depending on the gap between the first and second connecting members (153, 154).

Referring to Figure 10, when the gap between the first connecting member (153) and the second connecting member (154) is widened, the joint portion (155) is provided so that the first and second links (156, 157) are unfolded. Alternatively, referring to Figure 9, when the gap between the first connecting member (153) and the second connecting member (154) narrows, the joint portion (155) is provided so that the first and second links (156, 157) are folded.

The plurality of gas removal parts (130) may comprise a first gas removal part (130A) to a fourth gas removal part (130D) according to the arrangement order of the plurality of pressure plates (111 to 114). In this instance, the first gas removal part (130A) to the fourth gas removal part (130D) have the same structure except that the positions of the installed pressure plates are different.

The plurality of position adjustment parts (150) may comprise a first position adjustment part (150A) to a fourth position adjustment part (150D) according to the arrangement order of the plurality of pressure plates (111 to 114).

Referring to Figure 4, the first position adjustment part (150A) is connected to the first gas removal part (130A), the second position adjustment part (150B) is connected to the second gas removing part (130B), the third position adjustment part (150C) is connected to the third gas removal part (130C), and the fourth position adjustment part (150D) is connected to the fourth gas removal part (130D).

During the activation process, the first to third battery cells (1A to 1C) are pressurized by the first to fourth pressure plates (111 to 114).

The control part (180) may control the operation of the jig part (110) so that the battery cell activation process is performed. In addition, the control part (180) may individually control the operation of the plurality of gas removal parts (130) and the plurality of position adjustment parts (150) so that the gas removal process is performed only on selected battery cells among the plurality of battery cells (1A, 1B, 1C).

Hereinafter, for convenience of explanation, the processes of performing the activation process and gas removal process of the first battery cell (1A) will be described. The gas removal process of the first battery cell (1A) may be performed by the first gas removal part (130A) and the second gas removal part (130B).

Referring to Figures 11 to 14, the first gas removal part (130A) is mounted on the first pressure plate (111). The first pressure plate (111) is a pressure plate disposed on one side of the first battery cell (1A), which is any one of the multiple battery cells (1A, 1B, 1C). Also, the second gas removal part (130B) is mounted on the second pressure plate (112). The second pressure plate (112) is a pressure plate disposed on the other side of the first battery cell (1A). The second gas removal part (130B) is disposed to be spaced apart from the first gas removal part (130A) along the arrangement direction (x-axis direction) of the pressure plates.

The first gas removal part (130A) may comprise a first venting module (133A) and a second venting module (134A). The first venting module (133A) and the second venting module (134A) are disposed to be spaced apart from each other on the first rail portion (131) of the first pressure plate (111) along the arrangement direction (X) of the pressure plate (111).

The second gas removal part (130B) may comprise a third venting module (133B) and a fourth venting module (134B). The third venting module (133B) and the fourth venting module (134B) are disposed to be spaced apart from each other on the first rail portion (131) of the second pressure plate (112) along the arrangement direction (X) of the pressure plates (111, 112).

The first position adjustment part (150A) is connected to the first gas removal part (130A), and the first position adjustment part (150A) adjusts the gap between the first venting module (133A) and the second venting module (134A). In addition, the second position adjustment part (150B) is connected to the second gas removal part (130B), and the second position adjustment part (150B) adjusts the gap between the third venting module (133B) and the fourth venting module (134B).

In this document, the gas removal process may comprise a piercing step of forming a degas hole (7) in the gas pocket (5) of the battery cell (1A), a venting step of removing the gas in the gas pocket (5) through the degas hole (7), and a sealing step of sealing the degas hole (7).

Referring to Figures 10, 11, and 12, the first position adjustment part (150A) operates to widen the gap between the first venting module (133A) and the second venting module (134A) during the piercing process. Also, the second position adjustment part (150B) operates to widen the gap between the third venting module (133B) and the fourth venting module (134B) during the gas removal process.

Referring to Figure 12, in the piercing step, the gap of the pair of venting modules in the first gas removal part (130A) and the second gas removal part (130B) is adjusted to the first gap (Dp).

When the gap of the pair of venting modules in the first gas removal part (130A) and the second gas removal part (130B) is adjusted to the first gap (Dp), the piercing unit (135) of the second venting module (134A) and the piercing unit (135) of the third venting module (133B) contact both sides of the gas pocket (5) of the first battery cell (1A). At this time, the piercing units (135) of the second venting module (134A) and the third venting module (133B) may form degas holes in the gas pocket (5) on both sides of the first battery cell (1A).

Referring to Figure 13, the first position adjustment part (150A) operates so that upon the gas removal process after the piercing process, the first venting module (133A) and the second venting module (134A) narrow the gap while moving in a direction where they become closer. In addition, the second position adjustment part (150B) operates to narrow the gap between the third venting module (133B) and the fourth venting module (134B) upon the gas removal process after the piercing process.

In the venting step, the gap of the pair of venting modules in the first gas removal part (130A) and the second gas removal part (130B) is adjusted to the second gap (Dv). The second gap (Dv) may be narrower than the first gap (Dp).

For example, when the first gap (Dp) is 5.5mm, the second gap (Dv) may be 2.5mm. The second gap (Dv) considers the state where the gas pocket (5) of the battery cell (1A) is expanded by gas.

After the piercing step and before the venting step, the first position adjustment part (150A) adjusts the gap between the pair of venting modules (133A, 134A) in the first gas removal part (130A) to the second gap (Dv), and the second position adjustment part (150B) adjusts the gap between the pair of venting modules (133B, 134B) in the second gas removal part (130B) to the second gap (Dv).

In this instance, the vacuum unit (136) of the second venting module (134A) and the vacuum unit (136) of the third venting module (133B) contact both sides of the gas pocket (5) of the first battery cell (1A). The vacuum units (136) of the second venting module (134A) and the third venting module (133B) are positioned to cover the degas hole (7) of the first battery cell (1A). The vacuum units (136) suck the gas in the gas pocket (5).

Upon operation of the vacuum units (136) of the second venting module (134A) and the third venting module (133B), the gas generated in the first battery cell (1A) during the activation process may be removed.

Referring to Figure 14, in the sealing step, the gap between the pair of venting modules in the first gas removal part (130A) and the second gas removal part (130B) is adjusted to the third gap (Ds).

After the venting step and before the sealing step, the first position adjustment part (150A) adjusts the gap between the first venting module (133A) and the second venting module (134A) in the first gas removal part (130A) to the third gap (Ds). For example, when the first gap (Dp) is 5.5mm, the third gap (Ds) may be 6.0mm. In addition, the second position adjustment part (150B) adjusts the gap between the third venting module (133B) and the fourth venting module (134B) to the third gap (Ds).

When the pair of venting modules is adjusted to the third gap (Ds), the sealing unit (137) of the second venting module (134A) and the sealing unit (137) of the third venting module (133B) contact both sides of the gas pocket (5) of the first battery cell (1A). Each sealing unit (137) provides heat to the region containing the degas hole of the gas pocket (5), thereby sealing the degas hole region of the first battery cell (1A).

When the sealing step of the first battery cell (1A) is completed, the first position adjustment part (150A) adjusts the positions of the first venting module (133A) and the second venting module (134A) so that the first venting module (133A) and the second venting module (134A) become closer to each other. In addition, the second position adjustment part (150B) operates in the same manner as the first position adjustment part (150A), and the first gas removal part (130A) and the second gas removal part (130B) are separated from the first battery cell (1A).

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

According to the battery cell formation device related to at least one example of the present invention, the gas removal part is integrated into the pressure plate for pressurizing the battery cells, whereby it is possible to promote miniaturization of the device, and by performing the gas removal process for each battery cell during the activation process on the plurality of battery cells, it is possible to improve the activation efficiency of the battery cells.

## Claims

1. A battery cell formation device comprising:
a jig part including a plurality of pressure plates movably provided to pressurize a plurality of battery cells;
a gas removal part provided to be movable together with one pressure plate of the plurality of pressure plates, and connected to the pressure plate to face a gas pocket of the battery cell in contact with the pressure plate; and
a position adjustment part provided to adjust the position of the gas removal part on the pressure plate.

2. The battery cell formation device according to claim 1, wherein
the position adjustment part is provided to be movable together with the pressure plate.

3. The battery cell formation device according to claim 2, further comprising:
a first rail extending along the moving direction of the pressure plate and provided on the pressure plate to guide the movement of the gas removal part; and
a frame part disposed apart from the pressure plate and provided with a guide rail guiding the movement of the position adjustment part in the moving direction of the pressure plate.

4. The battery cell formation device according to claim 3, wherein
the gas removal part comprises first and second venting modules each provided to perform a gas removal process in a gas pocket of the battery cell disposed toward a first surface of the pressure plate and a gas pocket of the battery cell disposed toward a second surface of the pressure plate in the opposite direction to the first surface.

5. The battery cell formation device according to claim 4, wherein
the first and second venting modules are each provided to be movable on the pressure plate, and
the position adjustment part is provided to adjust a gap between the first and second venting modules.

6. The battery cell formation device according to claim 4, wherein the first and second venting modules each comprise
a piercing unit provided to form a degas hole in the gas pocket of the battery cell;
a vacuum unit provided to apply vacuum pressure to the degas hole and to suck the gas in the gas pocket; and
a sealing unit sealing the degas hole.

7. The battery cell formation device according to claim 6, wherein
the vacuum unit is provided to surround the piercing unit, and
the sealing unit is provided to surround the vacuum unit.

8. The battery cell formation device according to claim 7, wherein
the sealing unit is provided to seal a region with a diameter larger than that of the degas hole.

9. The battery cell formation device according to claim 7, wherein
the vacuum unit is provided to protrude toward the gas pocket of the battery cell rather than the sealing unit.

10. The battery cell formation device according to claim 6, wherein
the first and second venting modules are provided so that the centers of the respective piercing units are not located on the same side.

11. The battery cell formation device according to claim 6, wherein
the position adjustment part adjusts the gap between the first and second venting modules to a first gap upon operation of the piercing unit, and
the position adjustment part is provided to adjust the gap between the first and second venting modules to a second gap, which is narrower than the first gap, upon operation of the vacuum unit.

12. The battery cell formation device according to claim 11, wherein
the position adjustment part adjusts the gap between the first and second venting modules to a third gap, which is larger than the first gap, upon operation of the sealing unit.

13. The battery cell formation device according to claim 4, wherein the position adjustment part comprises:
a module drive part movably coupled to the guide rail;
a first connecting member connecting the first venting module provided on the pressure plate and the module drive part; and
a second connecting member connecting the second venting module provided on the pressure plate and the module drive part, and
the module drive part is provided to adjust the gap between the first and second connecting members.

14. The battery cell formation device according to claim 13, wherein
the module drive part comprises a motor or a cylinder.

15. The battery cell formation device according to claim 13, wherein
the position adjustment part further comprises one or more joint portions connecting the first connecting member and the second connecting member, and
the joint portion comprises a first link hinge-connected to each of the first connecting member and the second connecting member, a second link disposed to intersect the first link and hinge-connected to each of the first connecting member and the second connecting member, and a hinge axis connecting the first link and the second link in the intersection region of the first link and the second link.
